(19) **Europäisches Patentamt European Patent Office Office européen des brevets**

(11) **EP 3 847 734 B1**

(12) **FASCICULE DE BREVET EUROPEEN**

(45) Date de publication et mention de la délivrance du brevet:
**10.08.2022 Bulletin 2022/32**

(21) Numéro de dépôt: **19783091.2**

(22) Date de dépôt: **19.08.2019**

(51) Classification Internationale des Brevets (IPC):
*B60L 15/00* (2006.01)  *B60L 50/64* (2019.01)
*B60L 58/12* (2019.01)  *B60L 58/21* (2019.01)
*B60L 58/22* (2019.01)  *H02M 7/49* (2007.01)
*H02M 7/5395* (2006.01)  *H02J 7/14* (2006.01)

(52) Classification Coopérative des Brevets (CPC):
**H02J 7/1423; B60L 15/007; B60L 50/64; B60L 58/12; B60L 58/21; B60L 58/22; H02J 7/1492; H02M 7/49; H02M 7/5395;** B60L 2210/40; B60L 2240/545; B60L 2240/547; B60L 2240/549; H02M 1/0025; Y02T 10/62; (Cont.)

(86) Numéro de dépôt international:
**PCT/FR2019/051935**

(87) Numéro de publication internationale:
**WO 2020/049237 (12.03.2020 Gazette 2020/11)**

(54) **PROCÉDÉ DE COMMANDE D'UN ÉQUIPEMENT D'ALIMENTATION ÉLECTRIQUE D'UN SYSTÈME ÉLECTRIQUE**

VERFAHREN ZUR STEUERUNG EINER STROMVERSORGUNGSVORRICHTUNG EINES ELEKTRISCHEN SYSTEMS

METHOD FOR CONTROLLING A POWER SUPPLY DEVICE OF AN ELECTRICAL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.09.2018 FR 1857883**

(43) Date de publication de la demande:
**14.07.2021 Bulletin 2021/28**

(73) Titulaire: **Commissariat à l'Énergie Atomique et aux Énergies Alternatives 75015 Paris (FR)**

(72) Inventeurs:
• **CASSARINO, Leandro 38054 Grenoble Cedex 9 (FR)**
• **BACQUET, Sylvain 38054 Grenoble Cedex 9 (FR)**
• **DESPESSE, Ghislain 38054 Grenoble Cedex 9 (FR)**
• **FERNANDEZ, Eric 38054 Grenoble Cedex 9 (FR)**
• **LOPEZ, Yan 38054 Grenoble Cedex 9 (FR)**
• **THOMAS, Rémy 38054 Grenoble Cedex 9 (FR)**

(74) Mandataire: **INNOV-GROUP 310, avenue Berthelot 69372 Lyon Cedex 08 (FR)**

(56) Documents cités:
US-A- 6 058 032  US-A1- 2014 167 515
US-A1- 2016 261 123

(52) Classification Coopérative des Brevets (CPC):
(Cont.)
Y02T 10/64; Y02T 10/70; Y02T 10/7072;
Y02T 10/72; Y02T 10/92; Y02T 90/14

## Description

## Domaine technique de l'invention

La présente invention se rapporte à un procédé de commande d'un équipement d'alimentation électrique d'un système électrique ainsi qu'à un système de commande dudit équipement d'alimentation électrique.

## Etat de la technique

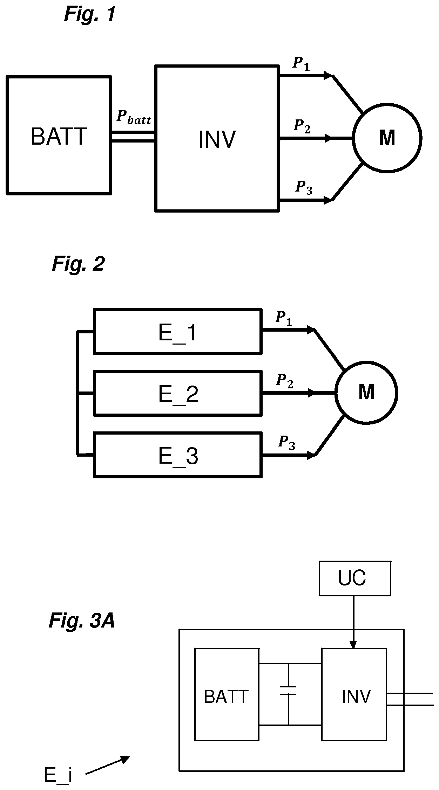

Il est connu d'alimenter un système tel qu'une machine électrique, par exemple un moteur électrique utilisé dans un véhicule électrique, en utilisant un pack-batterie. En référence à la figure 1, le pack-batterie BATT fournit une tension continue qu'un onduleur INV est chargé de convertir pour fournir des tensions de commande au moteur électrique M sur ses deux ou trois phases (selon la configuration du moteur). Le pack-batterie peut comporter plusieurs batteries, chaque batterie comportant elle-même plusieurs cellules de stockage. Le système peut être réversible et le freinage mécanique du moteur peut également permettre de recharger les batteries du pack batterie. Dans cette topologie classique, comme l'onduleur INV prélève de la puissance Pbatt sur un seul pack batterie BATT, même si les puissances injectées sur les phases du moteur ne sont pas identiques, cela n'a pas d'influence sur l'équilibrage des batteries présentes dans le pack batterie. Autrement dit, l'état des différentes batteries présentes dans le pack-batterie importe peu tant que la puissance nécessaire au fonctionnement du moteur est disponible (c'est-à-dire que le pack batterie est suffisamment chargé).

La problématique est différente quand la topologie d'alimentation d'une machine électrique utilise plusieurs ensembles d'alimentation électrique E_1, E_2, E_3 (E_i) distincts, un par phase, comme représenté sur la figure 2. Les ensembles d'alimentation comportent alors chacun un pack-batterie distinct ou une batterie distincte et n'ont aucun lien de puissance entre eux (c'est-à-dire que, aucun transfert direct d'énergie électrique d'un ensemble d'alimentation électrique à un autre ensemble d'alimentation électrique n'est possible). En effet, dans cette topologie, comme la puissance P1, P2, P3 est prélevée de manière indépendante sur les trois packs batteries, l'état des différents packs batteries impacte le fonctionnement de l'équipement d'alimentation électrique global. Dans cette configuration, avec trois packs batterie séparés, si les puissances injectées sur les trois phases ne sont pas identiques, un déséquilibre peut apparaitre entre chacun des trois packs-batterie. En effet, le pilotage traditionnel d'un moteur s'effectue en fournissant trois tensions ou trois courants, déphasés de 120°, mais de même amplitude. Comme les bobinages du moteur électrique M ne sont pas parfaitement identiques, l'application d'une même amplitude de tension ou de courant sur les trois phases va engendrer des puissances différentes sur les trois phases. Autrement dit, d'une phase à l'autre, même en appliquant des consignes identiques, les trois packs-batterie seront très souvent dans des états différents. Dans le temps, ils seront donc amenés à avoir des comportements différents, en charge ou en décharge. Par ailleurs, il faut noter que le déséquilibre entre les trois packs-batterie pourra également être lié au fait que les packs-batterie ne sont pas rigoureusement identiques, que leur état de charge initial est différent, que leur température en fonctionnement est différente, ou que leur état de santé (State Of Health) est différent (ce dernier pouvant évoluer de manière différente dans le temps, d'un pack à l'autre).

Le but de l'invention est donc de proposer une solution permettant de gérer les différences d'état des packs-batterie dans une topologie où chaque phase est connectée à un ensemble d'alimentation électrique distinct et séparé des autres du point de vue puissance.

Le document de l'Art antérieur US 6 058 032 A décrit le préambule des revendications indépendantes 1 et 14.

On identifie également le document US 2016/261123 A1 de l'Art antérieur.

## Exposé de l'invention

Ce but est atteint par un procédé de commande d'un équipement d'alimentation électrique d'un système électrique à plusieurs phases, ledit équipement comprenant au moins un ensemble d'alimentation électrique distinct par phase dudit système électrique, chaque ensemble d'alimentation électrique comprenant au moins un pack-batterie défini par un paramètre d'état et doté d'au moins une batterie destinée à fournir une tension de commande sur la phase à laquelle il est connecté en tenant compte d'au moins une valeur de consigne, ledit procédé consistant à :

- Exécuter au moins un bloc de correction recevant en entrée chaque valeur de consigne et le paramètre d'état de chaque pack-batterie des ensembles d'alimentation électrique du système,
- Pour chaque ensemble d'alimentation électrique, ledit bloc de correction étant configuré pour déterminer une valeur de correction à appliquer directement ou indirectement à sa valeur de consigne en tenant compte de la différence entre la valeur du paramètre d'état de son pack-batterie et de la valeur d'un paramètre d'état optimal déterminé à partir des valeurs des paramètres d'état des packs-batterie de tous les ensembles d'alimentation électrique.

Selon une particularité, pour chaque ensemble d'alimentation électrique, le paramètre d'état de la batterie correspond à son état de charge, sa température, sa résistance interne, son état de santé, sa capacité de charge ou à une combinaison de plusieurs de ces paramètres.

Selon une réalisation particulière, pour chaque ensemble d'alimentation électrique, ladite valeur de consigne est corrigée selon le principe suivant :

$$X_{corr\_i} = X_{set} * \left(1 - \frac{ST_i}{ST_{OPT}}\right)$$

où :

- $ST_i$ correspond à la valeur du paramètre d'état du pack-batterie de l'ensemble d'alimentation i (i=1, 2 ou 3) ;
- $ST_{OPT}$ correspond à la valeur optimale des trois valeurs de paramètres d'état ;
- $X_{corr\_i}$ correspond à la valeur de correction à appliquer à la valeur de consigne de l'ensemble d'alimentation électrique i ;
- $X_{set}$ correspond à la valeur de consigne à appliquer à l'ensemble d'alimentation électrique i ;

Selon une autre réalisation particulière, pour chaque ensemble d'alimentation électrique, ladite valeur de consigne est corrigée selon le principe suivant :

$$X_{corr\_i} = X_{set} * K * \left(1 - \frac{ST_i}{ST_{OPT}}\right)$$

où :

- $ST_i$ correspond à la valeur du paramètre d'état du pack-batterie de l'ensemble d'alimentation i (i=1, 2 ou 3) ;
- $ST_{OPT}$ correspond à la valeur optimale des trois valeurs de paramètres d'état;
- $X_{corr\_i}$ correspond à la valeur de correction à appliquer à la valeur de consigne de l'ensemble d'alimentation électrique i ;
- $X_{set}$ correspond à la valeur de consigne à appliquer à l'ensemble d'alimentation électrique i ;
- $K$ correspond à un coefficient de pondération ;

Selon une autre réalisation particulière, pour chaque ensemble d'alimentation électrique, ladite valeur de consigne est corrigée en mettant en œuvre une boucle de régulation avec un correcteur de type Intégral, Proportionnel-Intégral ou Proportionnel-Intégral-Dérivé, configurée pour annuler progressivement les écarts sur le paramètre d'état entre les ensembles d'alimentation électrique.

Selon une variante de réalisation, la valeur de consigne est une valeur de tension crête.

Selon une autre variante de réalisation, la valeur de consigne est une valeur de courant efficace. Selon cette autre variante, le procédé consiste à exécuter une boucle de régulation en courant, configurée pour déterminer chaque valeur de consigne en courant efficace à partir des valeurs mesurées des courants sur chaque phase du système électrique.

Selon une autre variante de réalisation, la valeur de consigne est une puissance électrique. Selon cette autre variante, le procédé comporte une étape de détermination d'une valeur de consigne en courant à partir de la valeur de consigne en puissance et des tensions mesurées sur les phases du système électrique.

Selon une particularité, la valeur de consigne est identique pour tous les ensembles d'alimentation.

Selon une réalisation particulière, le procédé consiste à exécuter un bloc de contrôle de saturation en tension configuré pour déterminer une valeur de consigne corrigée, tenant compte des tensions de commande à appliquer par chaque ensemble d'alimentation et de chaque valeur de consigne et ladite valeur de consigne corrigée déterminée devient la valeur de consigne appliquée en entrée dudit bloc de correction.

Selon une autre réalisation particulière, le procédé comporte une étape de lecture d'au moins une entrée représentative d'un mode charge ou d'un mode décharge de chaque pack-batterie.

L'invention concerne également un système de commande d'un équipement d'alimentation électrique d'un système électrique à plusieurs phases, ledit équipement comprenant au moins un ensemble d'alimentation électrique distinct par phase dudit système électrique, chaque ensemble d'alimentation électrique comprenant au moins un pack-batterie défini par un paramètre d'état et doté d'au moins une batterie destinée à fournir une tension de commande sur la phase à laquelle il est connecté en tenant compte d'au moins une valeur de consigne, ledit système comportant :

- Au moins un bloc de correction recevant en entrée chaque valeur de consigne et le paramètre d'état de chaque pack-batterie des ensembles d'alimentation électrique du système électrique,
- Pour chaque ensemble d'alimentation électrique, ledit bloc de correction étant configuré pour déterminer une valeur de correction à appliquer directement ou indirectement à sa valeur de consigne en tenant compte de la différence entre la valeur du paramètre d'état de son pack-batterie et de la valeur d'un paramètre d'état optimal déterminé à partir des valeurs des paramètres d'état des packs-batterie de tous les ensembles d'alimentation électrique.

Selon une réalisation particulière, le système peut comporter un bloc de contrôle de saturation en tension configuré pour déterminer une valeur de consigne corrigée, tenant compte des tensions de commande à appliquer par chaque ensemble d'alimentation et de chaque valeur de consigne, ladite valeur de consigne corrigée déterminée devenant la valeur de consigne appliquée en entrée dudit bloc de correction.

Selon une réalisation particulière, le système peut comporter au moins un bloc de lecture d'une entrée représentative d'un mode charge ou d'un mode décharge de chaque pack-batterie.

L'invention concerne également un équipement d'alimentation électrique d'un système électrique à plusieurs phases, ledit équipement comprenant au moins un ensemble d'alimentation électrique distinct par phase dudit système électrique, chaque ensemble d'alimentation électrique comprenant au moins un pack-batterie défini par un paramètre d'état et doté d'au moins une batterie destinée à fournir une tension de commande sur la phase à laquelle il est connecté en tenant compte d'au moins une valeur de consigne, ledit équipement comportant un système de commande tel que défini ci-dessus, adapté pour commander chaque ensemble d'alimentation électrique de l'équipement pour obtenir une charge complète ou une décharge complète de tous les packs-batterie de manière simultanée.

## Brève description des figures

D'autres caractéristiques et avantages vont apparaître dans la description détaillée qui suit faite en regard des dessins annexés dans lesquels :

- La figure 1 représente un équipement d'alimentation d'une machine électrique, tel que connu dans l'état de la technique.
- La figure 2 représente un équipement d'alimentation d'une machine électrique, auquel s'applique le principe de l'invention.
- Les figures 3A et 3B représentent deux variantes de réalisation d'un ensemble d'alimentation électrique employé dans un équipement d'alimentation conforme à celui de la figure 2 ; La figure 3C illustre le profil de tension fournie par trois ensembles d'alimentations électriques tels que représentés sur la figure 3B.
- La figure 4 représente un synoptique de commande illustrant de manière générale le procédé de commande de l'invention.
- Les figures 5 à 11 représentent des synoptiques de commandes illustrant plusieurs modes de réalisation du procédé de commande de l'invention.
- Les figures 12 et 13 représentent des diagrammes illustrant le principe de fonctionnement de l'invention.

## Description détaillée d'au moins un mode de réalisation

L'invention s'applique à la commande d'une machine électrique, par exemple un moteur électrique M. Le moteur électrique peut être de tous types, synchrone ou asynchrone. Il est à deux phases ou plus. Dans la description qui suit et sur les figures annexées, de manière non limitative, l'invention est décrite pour un moteur électrique M triphasé.

Le moteur électrique M est alimenté par un équipement d'alimentation électrique, qui comporte plusieurs ensembles d'alimentation électrique E_1, E_2, E_3 distincts. Un ensemble d'alimentation électrique distinct est connecté sur chaque phase du moteur électrique.

Dans la suite de la description, on fait référence à des packs-batterie. Un pack-batterie BATT comporte au moins une batterie, en règle générale plusieurs batteries arrangées en série et parallèle, pour fournir une tension continue. Chaque batterie comporte plusieurs cellules de stockage d'énergie électrique.

On rappelle que, par cellule, on entend une cellule élémentaire ou un groupe de cellules élémentaires placées en série et/ou en parallèle. Par cellule élémentaire, il peut s'agir d'un élément de stockage (cellule de batterie, capacité électrique, $\mu$batterie...), d'un générateur (pile à combustible, pile Zinc-air, cellule photovoltaïque, ou d'une combinaison des deux (générateur associé à un élément de stockage tampon). La tension d'une cellule est typiquement comprise entre 2.5V et 50V.

Chaque ensemble d'alimentation électrique peut prendre deux configurations distinctes :

- Une première configuration représentée sur la figure 3A dans laquelle il comporte au moins un pack-batterie BATT et un onduleur INV ;

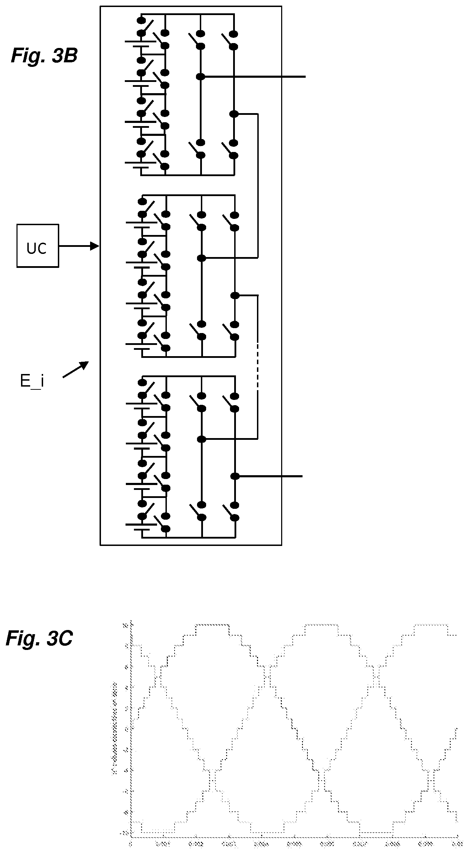

- Une deuxième configuration représentée sur la figure 3B dans laquelle il comporte au moins un pack-batterie dont chaque batterie est dite à cellules commutées ;

Dans la première configuration, l'onduleur INV reçoit une tension continue en provenance du pack-batterie et est commandé par un système de commande UC pour la convertir en une tension variable à destination du moteur électrique.

Dans la deuxième configuration, chaque cellule d'une batterie du pack-batterie BATT peut être commutée entre un état actif et un état inactif grâce à des moyens de commutation adaptés connectés en série et parallèle de chaque cellule. Un système de commande UC est chargé de commander les moyens de commutation pour faire varier la tension obtenue en sortie de chaque batterie du pack, et donc du pack-batterie dans sa totalité. Le pack-batterie est alors commandé pour appliquer une tension variable à destination du moteur électrique. Ce type d'architecture est notamment décrit dans les demandes de brevet n°WO2013/007810A1, WO2012/117111A1, WO2012/117110A2, WO2012/117/109A1 ou US9493090B2. En variante, les cellules sont commutées en série/parallèle, tel que décrit dans les brevets WO2013007810 ou WO2012168426. Ce montage permet notamment la génération de tensions positives et négatives, telle que la forme d'onde présentée en Fig. 3C.

Dans la première configuration, chaque tension de commande peut être générée par le système grâce à une modulation en largeur d'impulsion (MLI ou PWM en anglais) permettant de déterminer les ordres de commande des interrupteurs de l'onduleur INV.

Dans la deuxième configuration, la tension de commande est générée par le système en déterminant le nombre de cellules du pack batterie à connecter sur la phase du moteur électrique en fonction de la tension de commande à appliquer.

Sur les dessins annexés, trois blocs de pilotage BP_1, BP_2, BP_3 du système de commande UC sont schématisés pour recevoir chacun une tension de commande distincte en valeur crête à appliquer sur une phase et pour déterminer les ordres de commande Cd_1, Cd_2, Cd_3 à appliquer sur les trois ensembles d'alimentation électrique E_1, E_2, E_3.

Dans la suite de la description et sur les dessins annexés, nous ferons référence de manière générale à un ensemble d'alimentation électrique E_1, E_2, E_3 pour tenir compte des deux configurations exposées ci-dessus. Dans les deux configurations, l'ensemble d'alimentation électrique comporte au moins un pack-batterie. Le système de commande peut comporter plusieurs unités de surveillance associées chacune à un ensemble d'alimentation électrique distinct. Le système de commande peut comporter notamment un microprocesseur, des moyens de mémorisation et des entrées pour recevoir des données de mesure et des sorties pour envoyer les ordres de commande.

Dans l'architecture de la figure 2, les trois ensembles d'alimentation E_1, E_2, E_3 sont bien entendu connectés entre eux pour permettre un rebouclage du courant entre les phases.

Selon un aspect particulier de l'invention, les ensembles d'alimentation électrique ont chacun un fonctionnement indépendant. Un transfert direct d'énergie électrique d'un pack-batterie d'un ensemble d'alimentation électrique à un pack-batterie d'un autre ensemble d'alimentation électrique est impossible.

En référence à la figure 3C, chaque ensemble d'alimentation électrique E_1, E_2, E_3 est commandé de manière à générer une tension variable présentant un profil sinusoïdal, dans lequel la sinusoïde est formée de plusieurs paliers de tension successifs. Pour les trois phases, les trois tensions sont déphasées de 120°.

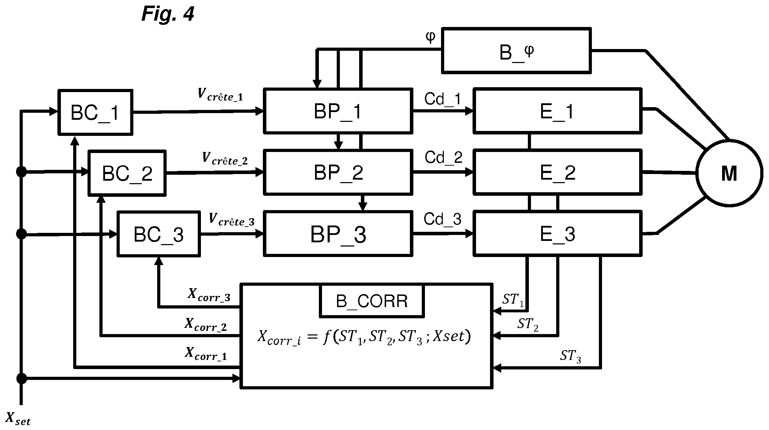

En référence à la figure 4, pour chaque ensemble d'alimentation électrique, le système de commande UC reçoit une valeur de consigne $X_{set}$.

Selon différentes variantes de réalisation qui seront décrites ci-après, la valeur de consigne $X_{set}$ peut être :

- Une valeur de tension électrique crête ;
- Une valeur de courant électrique efficace ;
- Une valeur de puissance électrique à fournir ;

La valeur de consigne est avantageusement commune à toutes les phases mais, dans certaines configurations (contrôle en boucle ouverte par exemple), elle pourra être distincte pour chaque phase.

En fonction de cette valeur de consigne le système de commande UC calcule, pour chaque phase du moteur électrique, une tension de commande en valeur crête $V_{crête\_1}$, $V_{crête\_2}$, $V_{crête\_3}$. Pour cela, le système de commande est configuré pour exécuter plusieurs blocs de contrôle, un bloc de contrôle BC_1, BC_2, BC_3 par phase. Comme illustré par les figures annexées, chaque bloc de contrôle reçoit une valeur de consigne à générer en sortie et détermine la tension de commande en valeur crête $V_{crête\_1}$, $V_{crête\_2}$, $V_{crête\_3}$ à appliquer à chaque bloc de pilotage BP_1, BP_2, BP_3.

On verra ci-après que les blocs de contrôle BC_1, BC_2, BC_3 pourront être réalisés selon différentes variantes de réalisation.

Chaque bloc de pilotage BP_1, BP_2, BP_3 détermine pour sa phase, les ordres de commande Cd_1, Cd_2, Cd_3 à appliquer à l'ensemble d'alimentation électrique E_1, E_2, E_3 auquel il est affecté.

De manière classique, les blocs de pilotage BP_1, BP_2, BP_3 sont synchronisés avec la position électrique du moteur, référencée φ, fournie par un bloc B_φ de détermination, qui utilise des capteurs à effet Hall dans le moteur. Alternativement, cette position φ peut être estimée sans capteur ("sensorless") par un estimateur de position, qui peut utiliser les tensions et/ou les courants du moteur. Alternativement, le moteur peut être asynchrone, ce qui ne nécessite pas de connaitre la position angulaire du moteur pour la synchronisation.

Pour rappel, dans la réalité, les bobinages du moteur électrique M ne sont pas parfaitement identiques, donc le courant consommé par le moteur M, sur les trois phases, ne dépend pas seulement de la tension et du couple appliqué au moteur, mais il dépend également des caractéristiques des différents bobinages, des différents circuits magnétiques, des imperfections de réalisation. Par conséquent, la consommation n'est pas forcement identique sur chaque phase, même si la tension appliquée sur les trois phases est de la même amplitude, et d'un ensemble d'alimentation électrique à l'autre, les packs-batterie ne seront donc pas déchargés de la même manière.

De plus, les trois packs-batterie ne sont pas parfaitement identiques, car ils peuvent présenter un état différent, défini par un paramètre d'état $ST_i$ associé à chaque pack-batterie.

Ce paramètre d'état $ST_i$ peut correspondre à une fonction quelconque d'un ou plusieurs paramètres tels que l'état de charge (SOC pour "State of Charge") du pack-batterie, l'état de santé (SOH pour "State of Health") des cellules du pack-batterie, la capacité de stockage des cellules du pack batterie, la résistance interne des cellules du pack-batterie, la température des cellules du pack-batterie, le courant demandé, la puissance demandée, le type de cellules utilisées dans le pack-batterie, les types de défauts détectés dans le pack-batterie ou dans les cellules du pack-batterie. Cette fonction peut aussi être pondérée par des paramètres non liés à l'état du pack-batterie. Il est par exemple possible d'accélérer volontairement la charge/décharge du pack-batterie pour le caractériser ou pour le placer dans un état de charge souhaité ou dans un état de sécurité.

Chaque pack-batterie peut ainsi intégrer les capteurs nécessaires à la mesure/détermination de ces différents paramètres, notamment par exemple un capteur de température au niveau de chacune de ses cellules, des capteurs de courant et tension au niveau de chaque cellule, des moyens de détermination de l'état de charge, de l'état de santé à l'aide d'algorithmes connus, des moyens de mesure de la résistance interne. Chaque pack-batterie peut intégrer une unité de surveillance localisée lui permettant de calculer et surveiller ces différents paramètres.

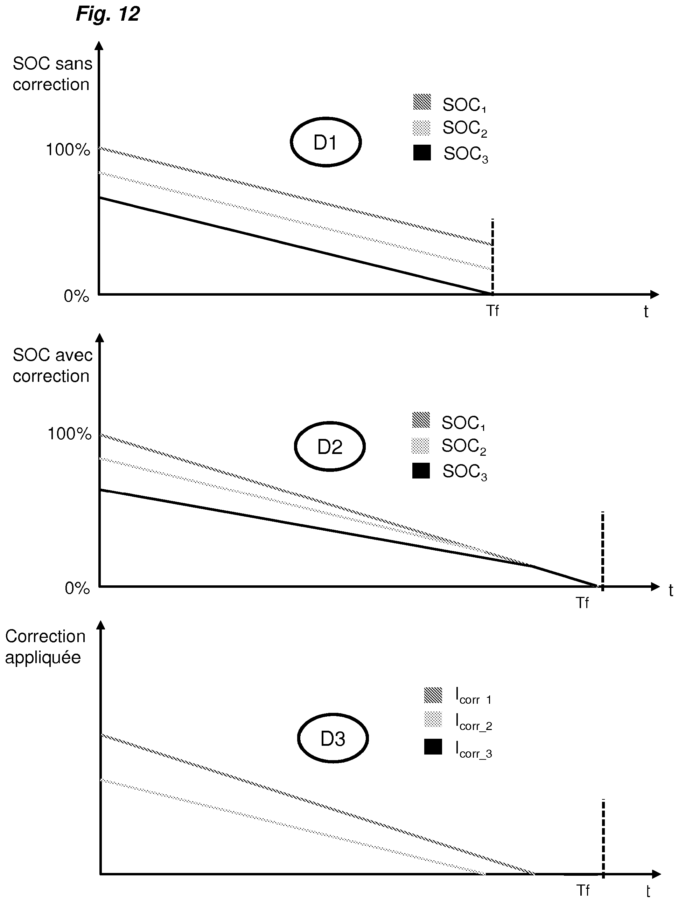

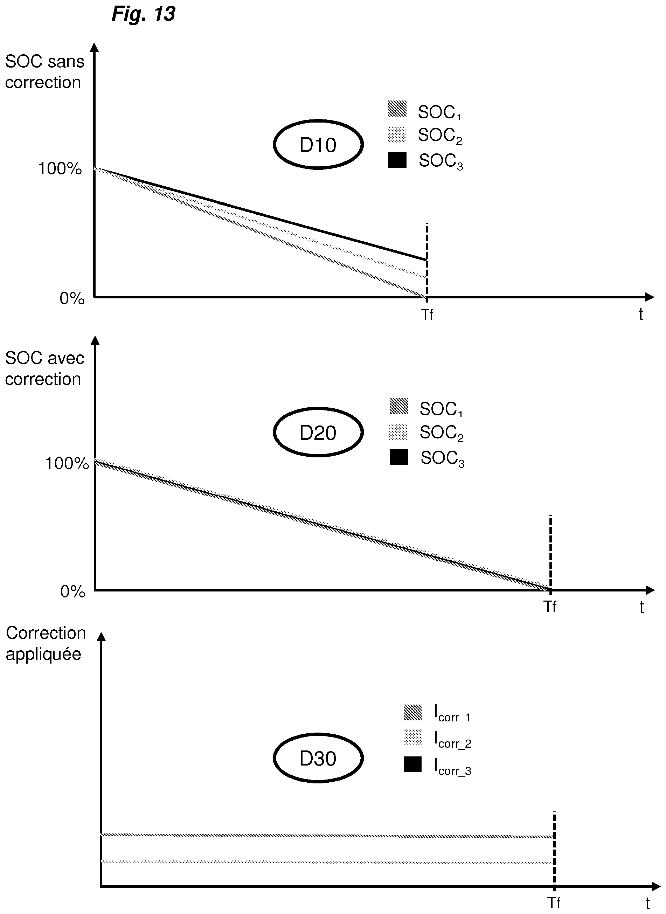

Les deux effets cités ci-dessus, c'est-à-dire une différence de consommation entre les packs-batterie et des packs-batterie qui ne sont pas forcément tous identiques d'un ensemble d'alimentation à l'autre, induisent un déséquilibre entre les trois packs-batterie, qui ne seront ainsi pas chargés ou déchargés au même niveau et qui risquent de ne pas atteindre la fin de charge ou de décharge au même moment. Ce phénomène est notamment illustré par les figures 12 et 13 qui seront explicitées ci-après.

La solution proposée, schématisée sur la figure 4 par le bloc de correction B_CORR, consiste à corriger la valeur de consigne $X_{set}$ injectée dans chaque bloc de contrôle BC_1, BC_2, BC_3, proportionnellement à l'écart entre la valeur du paramètre d'état $ST_i$ du pack-batterie de l'ensemble d'alimentation E_i à piloter et les valeurs du paramètre d'état du pack-batterie des deux autres ensembles d'alimentation électrique. Ainsi, on va réduire cette valeur de consigne $X_{set}$ pour l'ensemble d'alimentation électrique ou pour les ensembles d'alimentation électriques dont les pack-batteries se déchargent trop rapidement et on va ainsi permettre de décharger les packs batterie de manière homogène pour les faire arriver en fin de décharge en même temps. De cette manière, on exploite au maximum l'énergie du pack batterie. Le même principe sera applicable à la charge : La correction appliquée permet d'augmenter la valeur de consigne $X_{set}$ pour l'ensemble d'alimentation électrique ou les ensembles d'alimentation électrique qui se chargent trop rapidement, permettant ainsi de charger les sous-packs batterie de manière homogène pour les faire arriver en fin de charge en même temps.

Sur la figure 4, le bloc de correction B_CORR reçoit ainsi en entrée les valeurs $ST_1$, $ST_2$, $ST_3$ du paramètre d'état des pack-batteries des trois ensembles d'alimentation électrique puis détermine la valeur de correction $X_{corr\_1}$, $X_{corr\_2}$, $X_{corr\_3}$ à appliquer à la valeur de consigne de manière distincte pour chaque ensemble d'alimentation électrique. Il applique ainsi la relation suivante :

$$X_{corr\_i} = f\left(ST_1, ST_2, ST_3; X_{set}\right)$$

De manière non limitative, la valeur de consigne $X_{set}$ peut être identique pour les trois phases (comme sur la figure 4) ou pourrait être choisie distincte pour chaque phase.

La correction $X_{corr\_i}$ calculée est ensuite appliquée à la valeur de consigne $X_{set}$ dans chaque bloc de contrôle BC_i de manière à déterminer une valeur de consigne corrigée $V_{crête\_i}$, pour chaque phase i.

Le bloc de correction peut appliquer différents mécanismes de correction dans la fonction *f* définie ci-dessus :

- Un premier mécanisme est illustré par l'équation suivante :

$$X_{corr\_i} = X_{set} * \left(1 - \frac{ST_i}{ST_{OPT}}\right) \qquad (1)$$

Dans laquelle :

- $ST_i$ correspond à la valeur du paramètre d'état du pack-batterie de l'ensemble d'alimentation i (i=1, 2 ou 3) ;
- $ST_{OPT}$ correspond à la valeur optimale des trois valeurs de paramètres d'état ; selon le paramètre d'état choisi, il peut s'agir d'une valeur maximale ou d'une valeur minimale ;
- $X_{corr\_i}$ correspond à la valeur de correction à appliquer à la valeur de consigne de l'ensemble d'alimentation électrique i ;
- $X_{set}$ correspond à la valeur de consigne à appliquer à l'ensemble d'alimentation électrique i ;

D'autres mécanismes de correction peuvent être utilisés, par exemple en appliquant une pondération K de la manière suivante :

$$X_{corr\_i} = X_{set} * K * \left(1 - \frac{ST_i}{ST_{OPT}}\right)$$

Un autre mécanisme de correction de la valeur de consigne consiste à réaliser une boucle de régulation avec un correcteur de type Intégral, Proportionnel-Intégral (PI) ou Proportionnel-Intégral-Dérivé (PID), qui tend à annuler progressivement les écarts sur le paramètre d'état. Cette correction peut par exemple être de type intégral :

$$X_{corr\_i} = K_i \int_0^t (ST_i - ST_{OPT})dt$$

Cette intégrale peut bien sûr être saturée, pour limiter par exemple l'écart entre la valeur de consigne corrigée $X'_{set\_i}$ et la valeur de consigne $X_{set}$, par exemple à une valeur inférieure à 5%.

En utilisant l'équation (1) ci-dessus, on comprend que la valeur de consigne de l'ensemble d'alimentation disposant du paramètre d'état $ST_i$ optimal (égal donc à $ST_{OPT}$) ne sera pas corrigée (correction égale à zéro), la valeur de consigne des deux autres ensembles d'alimentation électrique sera réduite ou augmentée proportionnellement à la différence entre le paramètre d'état de leur pack-batterie et celui du pack-batterie dont le paramètre d'état est optimal. Il faut noter que si aucun des trois pack-batterie a son paramètre d'état qui est à l'état optimal $ST_{OPT}$, chaque valeur de consigne sera corrigée.

Le bloc de correction peut aussi intégrer une limitation des valeurs de corrections, après leur calcul, afin de ne pas compromettre les performances ou le bon fonctionnement du moteur, dans le cas où les corrections sont très différentes entre les trois phases. En effet, avec des tensions trop différentes l'une de l'autre, le moteur risque de ne pas fonctionner correctement. Il vaut mieux favoriser le bon fonctionnement du moteur, au détriment des performances de l'équilibrage des trois packs-batterie.

Selon un aspect particulier de l'invention, pour toutes les configurations qui seront décrites ci-dessous, il est possible d'ajouter un bloc de contrôle supplémentaire de saturation en tension B_SAT, qui réduit la valeur de consigne, si au moins une tension sur les trois phases sature à sa valeur maximale. Ce bloc reçoit en entrée la valeur de consigne et les tensions de commande en valeur crête $V_{crête\_1}$, $V_{crête\_2}$, $V_{crête\_3}$ à appliquer sur les trois phases ou mesurées directement sur les trois phases.

Ce bloc B_SAT, qui doit connaitre la valeur de tension maximale que chaque pack-batterie peut générer, s'occupe de réduire la valeur de consigne, quand une première tension (parmi les 3 phases) sature à sa valeur maximale. De cette manière, le bloc de contrôle de saturation en tension permet d'assurer qu'aucune tension ne sature et le bloc de correction B_CORR sur la valeur de consigne peut remplir sa fonction d'équilibrage des trois packs-batterie. De manière générale, ce bloc de saturation en tension applique la relation suivante :

$$X'_{set\_i} = f\left(X_{set\_i}; V_{crête\_1,2,3}\right)$$

On verra ci-dessous que ce bloc de contrôle en saturation en tension B_SAT peut s'appliquer quelle que soit la grandeur utilisée pour la valeur de consigne, c'est-à-dire courant, tension ou puissance.

Partant de ces principes généraux, on présente ci-dessous plusieurs modes de réalisation possibles, utilisant notamment différentes grandeurs comme valeurs de consigne.

Dans les différents exemples ci-dessous, le paramètre d'état choisi est l'état de charge de chaque pack-batterie, référencé $SOC_i$, avec i qui correspond à l'indice de référence du pack-batterie considéré. Le paramètre d'état optimal évoqué ci-dessus correspond ainsi à l'état de charge le plus élevé de l'un des trois packs-batterie et est référencé $SOC_{MAX}$. Bien entendu, il faut comprendre que les principes exposés ci-dessous sont applicables de manière identique pour un paramètre d'état différent.

### Valeur de consigne en valeur crête de tension

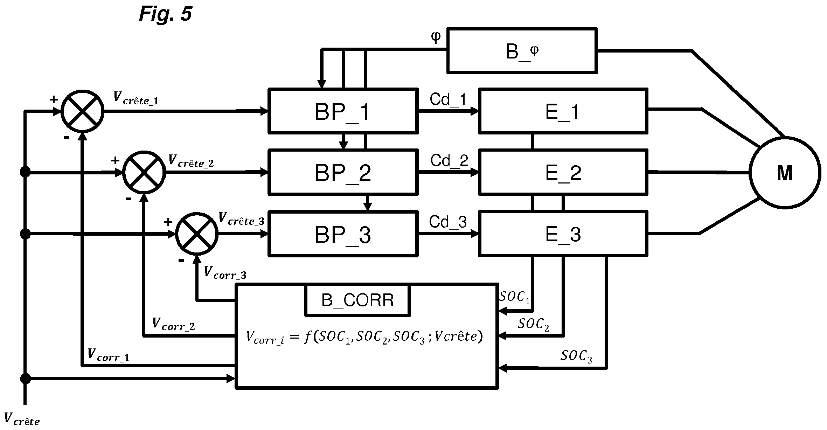

Sur la figure 5, la valeur de consigne est une valeur crête de tension $V_{crête}$. Le bloc de correction B_CORR applique ainsi la relation suivante :

$$V_{corr\_i} = f(SOC_i; V_{crête})$$

Le bloc de correction B_CORR détermine ainsi trois valeurs de correction $V_{corr\_1}$, $V_{corr\_2}$, $V_{corr\_3}$ à appliquer à la valeur de consigne $V_{crête}$ de manière à obtenir trois valeurs de consigne corrigées qui correspondent aux trois tensions de commande $V_{crête\_1}$, $V_{crête\_2}$, $V_{crête\_3}$. Chaque bloc de contrôle défini ci-dessus consiste ainsi à appliquer la valeur de correction calculée à la valeur de consigne afin de déterminer directement les trois tensions de commande $V_{crête\_1}$, $V_{crête\_2}$, $V_{crête\_3}$.

Un exemple de correction de la valeur de consigne, relativement à la figure 5 est donné par l'équation suivante :

$$V_{corr\_i} = V_{crête} * \left(1 - \frac{SOC_i}{SOC_{MAX}}\right) \qquad (2)$$

D'autres équations de correction peuvent être utilisées, par exemple une pondération K peut être utilisée :

$$V_{corr\_i} = V_{crête} * K * \left(1 - \frac{SOC_i}{SOC_{MAX}}\right)$$

Un autre exemple de correction de la consigne consiste à réaliser une boucle de régulation qui tend à annuler progressivement les écarts d'état de charge. Cette correction peut par exemple être de type intégral :

$$V_{corr\_i} = K_i \int_0^t (SOC_i - SOC_{MAX})dt$$

Cette intégrale peut bien sûr être saturée, pour limiter par exemple l'écart entre la tension de commande $V_{crête\_i}$ et la valeur de consigne $V_{crête}$ à moins de 5%.

En utilisant l'équation (2) ci-dessus, la valeur de consigne appliquée à l'ensemble d'alimentation électrique doté du pack-batterie disposant de l'état de charge $SOC_i$ le plus élevé (égal à $SOC_{MAX}$) ne sera pas corrigée (correction égale à zéro), la valeur de consigne des deux autres ensembles d'alimentation électrique sera réduite proportionnellement à la différence entre l'état de charge $SOC_i$ de leur pack-batterie et l'état de charge du pack-batterie le plus élevé.

Le bloc de correction peut aussi intégrer une limitation des valeurs de corrections, après leur calcul, afin de ne pas compromettre les performances ou le bon fonctionnement du moteur, dans le cas où les corrections sont très différentes entre les trois phases. En effet, avec des tensions trop différentes l'une de l'autre, le moteur risque de ne pas fonctionner correctement. Il vaut mieux favoriser le bon fonctionnement du moteur, au détriment des performances de l'équilibrage des trois packs-batterie.

Dans une variante de réalisation, le pilotage du moteur électrique peut être réalisé en boucle ouverte, avec trois valeurs de consigne distincte par phase.

Le bloc B_SAT de saturation en tension peut également être intégré d'une manière identique à celle exposée ci-dessus.

Il faut noter que la solution de la figure 5 est applicable à la charge ou à la décharge. En effet, dans une commande en tension, par exemple durant un freinage récupératif, on impose la vitesse du moteur et le système subit ainsi la valeur du courant. Afin de maitriser le courant de charge, il est alors possible de mesurer les courants sur les trois phases et d'appliquer une correction sur les consignes en tension crête de la même manière qu'en mode décharge.

### Valeur de consigne en courant efficace

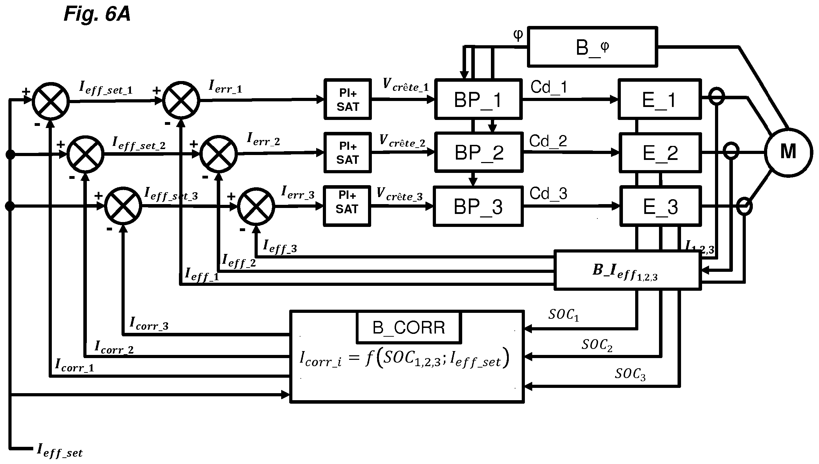

Sur les figures 6A à 6C, la valeur de consigne est une valeur de courant efficace $I_{eff\_set}$.

Comme la consigne est en courant efficace, le système peut utiliser une boucle de régulation en courant. Cette boucle de régulation utilise un correcteur (référencé PI+SAT) par phase qui calcule les tensions de commande $V_{crête\_1}$, $V_{crête\_2}$, $V_{crête\_3}$, en tenant compte de l'erreur de la boucle de courant correspondante (afin d'annuler cet erreur).

Une saturation en tension peut être directement incluse dans chaque correcteur de la boucle de régulation. La boucle de régulation peut comporter un bloc $B\_I_{eff1,2,3}$ de détermination des courants efficaces $I_{eff\text{-}1}$, $I_{eff\text{-}2}$, $I_{eff\_3}$ pour les trois phases, à partir des mesures de courant instantanés $I_1$, $I_2$, $I_3$ sur le moteur M. Alternativement, ce bloc $B\_I_{eff1,2,3}$ de détermination pourra utiliser seulement deux courants instantanés, pour calculer les trois courants efficaces.

Comme ci-dessus, les trois packs-batterie peuvent être déséquilibrés, à cause d'une différence de consommation sur les trois phases ou du fait d'une différence structurelle ou fonctionnelle entre les packs-batterie (état de charge, état de santé, capacité de charge, résistance interne, température...).

Un bloc de correction B_CORR sur la valeur de consigne en courant efficace $I_{eff\_set}$ est donc appliqué pour les trois blocs de contrôle, comme montré sur la figure 6A. Ce bloc de correction applique ainsi la relation suivante :

$$I_{corr\_i} = f\left(SOC_{1,2,3}; I_{eff\_set}\right)$$

Le bloc de correction B_CORR détermine ainsi trois valeurs de correction $I_{corr\_1}$, $I_{corr\_2}$, $I_{corr\_3}$ à appliquer à la valeur de consigne en courant efficace de manière à obtenir trois valeurs de consigne en courant corrigées $I_{eff\_set\_1}$, $I_{eff\_set\_2}$, $I_{eff\_set\_3}$. Ces trois valeurs de consigne corrigées sont ensuite injectées en entrée de la boucle de régulation de courant. Dans la boucle de régulation de courant, ces trois valeurs de consigne corrigées $I_{eff\_set\_1}$, $I_{eff\_set\_2}$, $I_{eff\_set\_3}$, sont comparées aux trois valeurs efficace $I_{eff\_1}$, $I_{eff\_2}$, $I_{eff\_3}$ déterminées par le bloc $B\_I_{eff1,2,3}$ afin de déterminer les erreurs en courant $I_{err\_1}$, $I_{err\_2}$, $I_{err\_3}$ sur les trois phases. Le correcteur de la boucle de régulation de courant permet ensuite de déterminer les trois tensions de commande $V_{crête\_1}$, $V_{crête\_2}$, $V_{crête\_3}$ à envoyer aux blocs de pilotage BP_1, BP_2, BP_3.

La correction mise en œuvre par le bloc de correction B_CORR, proportionnelle à l'écart sur l'état de charge $SOC_i$ du pack-batterie d'un ensemble d'alimentation électrique et ceux des packs-batterie des autres ensembles d'alimentation électrique, permet de réduire la valeur de consigne $I_{eff\_set}$ en courant efficace pour le pack-batterie ou les packs-batterie qui se déchargent trop rapidement et de générer un courant différentiel de compensation entre les trois phases, afin de décharger les packs-batterie de manière homogène et les faire arriver en fin de décharge en même temps. Comme pour l'exemple précédent, le même procédé est applicable à la charge.

Un exemple de correction de la valeur de consigne en courant, réalisée dans le bloc de correction B_CORR, est donné par l'équation suivante :

$$I_{corr\_i} = I_{eff\_set} * \left(1 - \frac{SOC_i}{SOC_{MAX}}\right) \qquad (3)$$

D'autres équations de correction sont possibles.

Un autre exemple de correction de la valeur de consigne consiste à réaliser une boucle de régulation qui tend à annuler progressivement les écarts sur l'état de charge. Cette correction peut par exemple être de type intégral :

$$I_{corr\_i} = K_i \int_0^t (SOC_i - SOC_{MAX})dt$$

Cette intégrale peut bien sûr être saturée, pour limiter l'écart entre la valeur de consigne $I_{eff\_set}$ et la valeur de consigne corrigée $I_{eff\_set\_i}$ à une valeur donnée, par exemple égale à moins de 15%.

En utilisant l'équation (3) ci-dessus, la valeur de consigne en courant efficace du pack-batterie avec l'état de charge à $SOC_{MAX}$ ne sera pas corrigée (correction égale à zéro).

L'efficacité de la solution présentée en figure 6A est limitée dans le cas où les trois tensions de commande $V_{crête\_1}$, $V_{crête\_2}$, $V_{crête\_3}$ calculées par les correcteurs PI, saturent à la tension maximale atteignable par les packs-batterie. Dans ce cas, en effet, les trois packs-batterie fournissent une tension qui est indépendante de la correction en courant générée par le bloc de correction B_CORR, donc indépendamment de leur écart d'état. L'équilibrage entre les trois packs-batterie n'est plus possible, car la correction ne pourra pas générer un courant différentiel de compensation. Cette situation peut arriver dans le cas où le couple de contre-réaction au couple fourni par le moteur est trop faible, par rapport à la valeur de consigne en courant (par exemple, dans le cas d'un moteur qui tourne à vide, sans charge). Pour atteindre le courant de consigne, il faudrait théoriquement une tension plus élevée que celle que le pack-batterie peut fournir et/ou que le moteur peut supporter.

Pour supprimer cette limitation vis-à-vis de l'équilibrage, il faut ajouter, sur la consigne de courant efficace, le bloc B_SAT de contrôle de saturation de la tension crête, qui réduit la consigne de courant efficace, si au moins une tension crête des trois phases sature à sa valeur maximale.

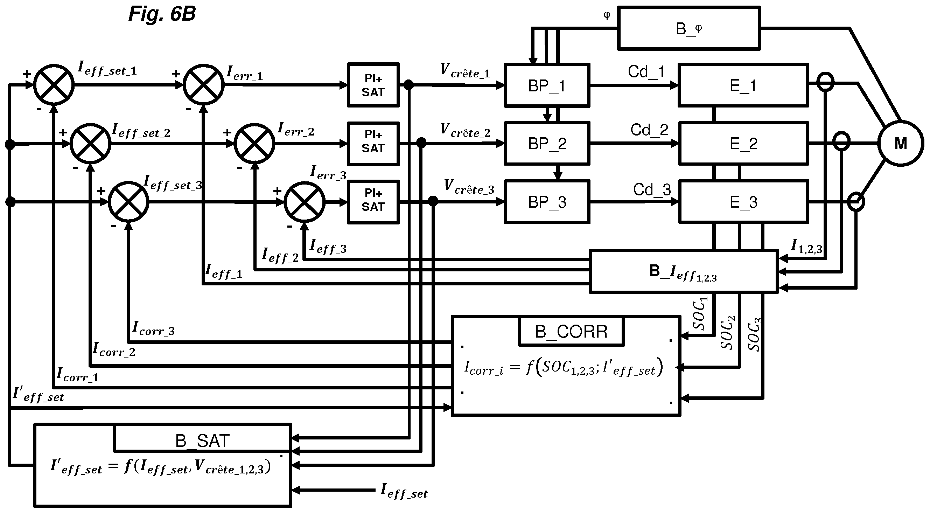

Ce bloc, comme montré sur la figure 6B reçoit en entrée la valeur de consigne en courant efficace $I_{eff\_set}$ et les tensions de commande $V_{crête\_1}$, $V_{crête\_2}$, $V_{crête\_3}$, et calcule la nouvelle consigne en courant efficace, selon la relation suivante :

$$I'_{eff\_set} = f\left(I_{eff\_set}; V_{crête\_1,2,3}\right)$$

Alternativement, ce bloc B_SAT de contrôle de saturation de la tension crête peut obtenir les valeurs de tension crête des trois phases, directement en mesurant la tension en sortie des trois packs-batterie.

Ce bloc B_SAT, qui doit connaitre la valeur de tension maximale que chaque pack-batterie peut générer, s'occupe de réduire la valeur de consigne en courant efficace $I_{eff\_set}$, pour lui donner la valeur $I'_{eff\_set}$ qui sera alors envoyée à la boucle de régulation en courant, quand une première tension (parmi les trois phases) sature à sa valeur maximale. De cette manière, ce bloc B_SAT de contrôle de saturation de tension crête permet d'assurer qu'aucune des tensions ne sature. Le bloc B_CORR de correction sur la consigne en courant efficace peut alors assurer sa fonction d'équilibrage des trois packs-batterie.

Comme le bloc B_SAT de contrôle de saturation de tension crête assure qu'aucune des tensions ne sature, il serait possible d'éliminer la fonction de saturation de la tension crête dans les correcteurs PI. Toutefois dans cet exemple, les correcteurs PI intègrent toujours cette fonction, afin de rendre plus robuste le système. En effet, l'effet du bloc de contrôle de saturation des tensions crête peut avoir du retard, à cause de la boucle d'asservissement et des correcteurs PI, ainsi que de l'éventuel retard de communication entre les blocs et de calcul des fonctions des différents blocs. La saturation de la tension crête, faite (dans le bloc PI) juste avant que celle-ci soit fournie au bloc de pilotage BP_1, BP_2, BP_3 correspondant, assure de ne jamais fournir une valeur de tension crête supérieure à la valeur maximale, atteignable par le pack-batterie.

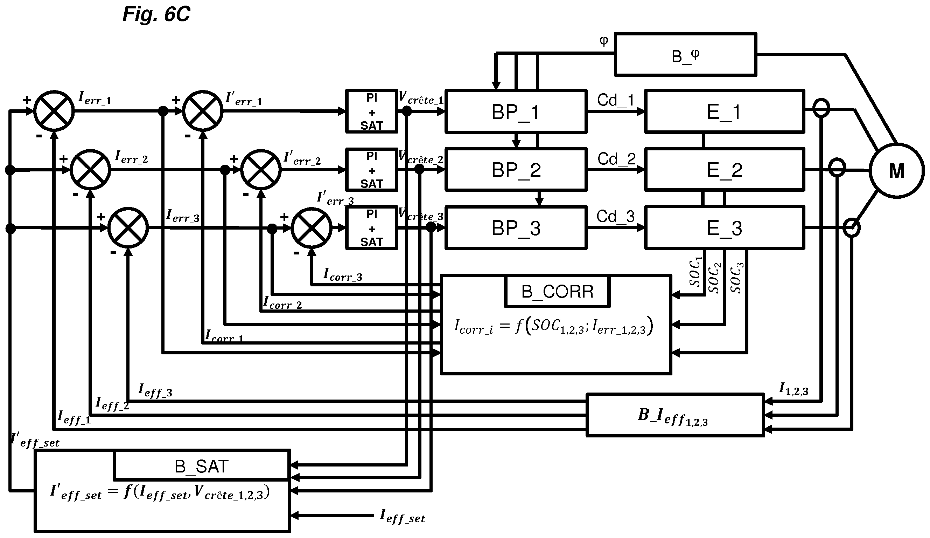

La figure 6C représente une variante de réalisation aux solutions des figures 6A et 6B. Dans cette variante, plutôt que de corriger la valeur de consigne en courant efficace $I_{eff\_set}$, le bloc de correction B_CORR applique les valeurs de correction $I_{corr\_1}$, $I_{corr\_2}$, $I_{corr\_3}$ calculées, pour chaque phase, directement sur les erreurs en courant $I_{err\_1}$, $I_{err\_2}$, $I_{err\_3}$ déterminées par la boucle de régulation, avant qu'elles ne soient fournies au correcteur PI destiné à déterminer les tensions de commande $V_{crête\_1}$, $V_{crête\_2}$, $V_{crête\_3}$. Le bloc de correction B_CORR reçoit alors en entrée les erreurs en courant efficace $I_{err\_1}$, $I_{err\_2}$, $I_{err\_3}$ et les états de charge $SOC_{1,2,3}$ des trois packs-batterie.

Le bloc de correction B_CORR ne réalise alors plus directement une correction qui est proportionnelle à la consigne en courant $I_{eff\_set}$, mais plutôt à l'erreur de courant interne à la boucle de régulation de courant de la phase à corriger.

$$Icorr\_i = I_{eff\_set} * \left(1 - \frac{SOC_i}{SOC_{MAX}}\right) \qquad (3)$$

devient donc :

$$I_{corr\_i} = f\left(SOC_{1,2,3}; I_{err\_1,2,3}\right)$$

Soit, par exemple, en intégrant le même principe de correction :

$$I_{corr_i} = I_{err_i} * \left(1 - \frac{SOC_i}{SOC_{MAX}}\right)$$

*Valeur de consigne en puissance*

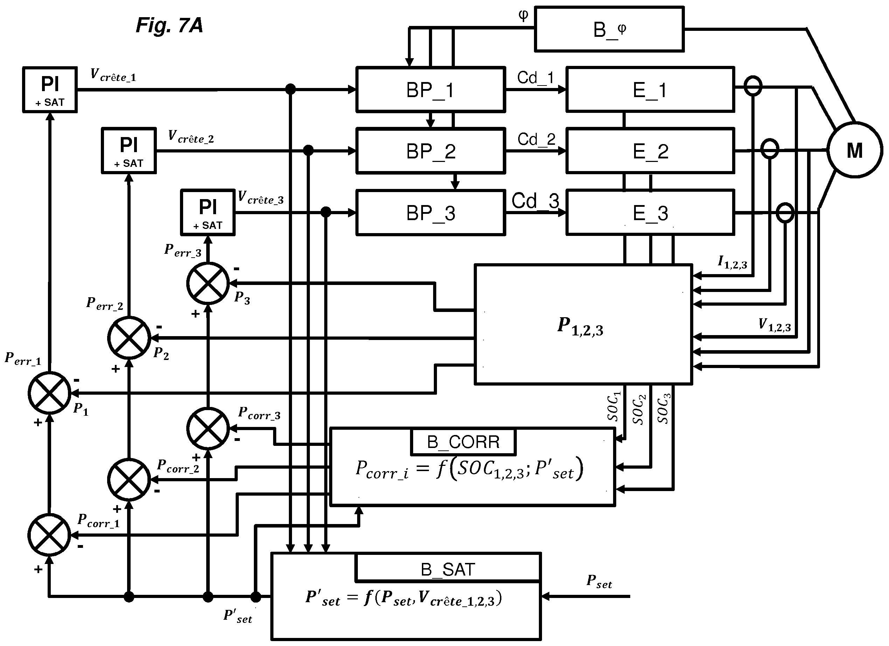

En référence à la figure 7A, le système est piloté en puissance avec une même valeur de consigne $P_{set}$ pour les trois phases et il contient une boucle de régulation en puissance par phase. Un bloc $P_{1,2,3}$ de détermination de la puissance calcule la puissance de sortie des trois phases, à partir des tensions $V_1$, $V_2$, $V_3$ et des courants $I_1$, $I_2$, $I_3$ en sortie des trois ensembles d'alimentation électrique. Des correcteurs de type PI (proportionnel-intégral) calculent pour chaque phase, à partir de l'erreur de puissance $P_{err\_1}$, $P_{err\_2}$, $P_{err\_3}$ la tension de commande $V_{crête\_1}$, $V_{crête\_2}$, $V_{crête\_3}$ à générer par l'ensemble d'alimentation électrique correspondant, en y incluant optionnellement une fonction de saturation de cette tension à une valeur maximale de tension atteignable par l'ensemble d'alimentation électrique.

Comme précédemment, afin d'assurer l'équilibrage de charge entre les packs-batterie, le système comporte un bloc de correction B_CORR spécifique sur la valeur de consigne en puissance $P_{set}$, qui permet de réduire la valeur de consigne en puissance pour le pack-batterie ou les packs-batterie qui se déchargent trop rapidement et de générer un courant différentiel de compensation entre les trois phases. La correction en puissance pour chaque pack-batterie est proportionnelle à l'écart sur l'état de charge $SOC_i$ du pack-batterie de l'ensemble d'alimentation électrique dont la valeur de consigne est à corriger et celui des autres packs-batterie.

Le bloc de correction B_CORR applique ainsi la relation suivante :

$$P_{corr\_i} = f\left(SOC_{1,2,3}; P'_{set}\right)$$

Dans laquelle $P'_{set}$ correspond à la valeur de consigne en puissance corrigée après application du bloc B_SAT de saturation en tension sur la valeur de consigne $P_{set}$ (voir ci-dessous).

Un exemple de correction de la valeur de consigne en puissance, est donné par l'équation suivante :

$$P_{corr\_i} = P'_{set} * \left(1 - \frac{SOC_i}{SOC_{MAX}}\right) \qquad (4)$$

Il est aussi possible d'utiliser une boucle de régulation qui ajuste la valeur de correction $P_{corr\_i}$ de manière à annuler l'écart entre l'état de charge $SOC_i$ et l'état de charge le plus élevé $SOC_{MAX}$. Le correcteur de cette boucle d'asservissement peut par exemple être de type intégral, proportionnel intégral, proportionnel intégral dérivé, ou autre.

En utilisant l'équation (4) ci-dessus, la valeur de consigne en puissance de l'ensemble d'alimentation électrique doté du pack-batterie avec l'état de charge $SOC_i$ le plus élevé (égal à $SOC_{MAX}$) ne sera pas corrigée (correction égale à zéro), la valeur de consigne des deux autres ensembles d'alimentation électrique sera corrigée proportionnellement à la différence entre l'état de charge de leur pack-batterie et l'état de charge le plus élevé $SOC_{MAX}$.

De même, le principe est applicable à la charge des packs-batterie et permet de faire en sorte que tous les packs-batterie arrivent en fin de chargement en même temps.

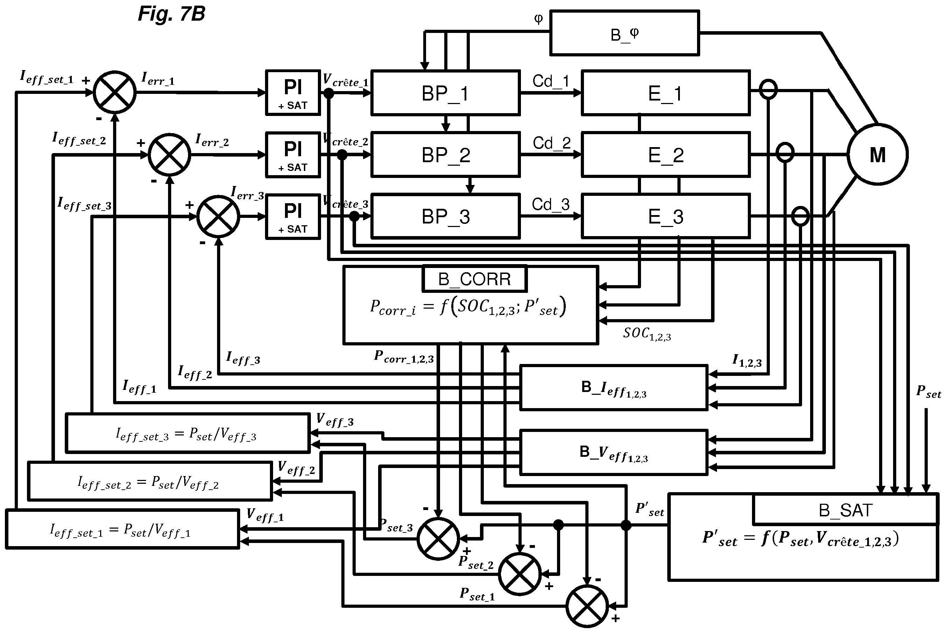

La figure 7B représente une variante de réalisation à la configuration de la figure 7A. Dans cette variante de réalisation, la valeur de consigne en puissance peut être convertie directement en plusieurs valeurs de consigne en courant, simplement en appliquant la relation suivante :

$$I_{eff\_set\_i} = P_{set}/V_{eff\_i}$$

Dans laquelle $V_{eff\_i}$ est la tension efficace mesurée sur la phase considérée.

Cette variante peut alors ensuite intégrer la boucle de régulation en courant déjà décrite ci-dessus pour réguler les courants à leur valeur de consigne $I_{eff\_set}$.

Dans cet exemple et ses différentes variantes, il est bien entendu possible d'appliquer le bloc B_SAT de saturation en tension sur la valeur de consigne en puissance $P_{set}$. Celui-ci s'appuie sur la relation suivante :

$$P'_{set\_i} = (P_{set}, V_{crête\_1,2,3})$$

*Autres variantes de réalisation*

Comme décrit précédemment, la consigne en courant efficace de la configuration de la figure 6A ou 6B, peut être limitée en prenant en compte d'autres paramètres, comme par exemple :

- La température des cellules utilisées dans chaque pack-batterie ;
- Le temps d'utilisation des cellules présentes dans chaque pack-batterie ;
- Le courant maximum que les cellules d'un pack-batterie peuvent supporter selon leur état (état de charge SOC, leur état de santé, leur vieillissement, leur résistance interne...). Par exemple, plus le courant qui traverse une cellule est élevé, plus la chute de tension liée à la résistance interne de la cellule est importante. Cette chute de tension peut ramener une cellule à sa limite basse de tension de fonctionnement et le système pourra être amené à ne plus utiliser cette cellule. Régler la consigne en courant permet d'optimiser le fonctionnement des cellules des packs-batterie selon les performances recherchées, donc une consigne plus faible permet d'exploiter au maximum la charge des cellules ou une consigne "non réduite" permet d'optimiser le fonctionnement du système alimenté.

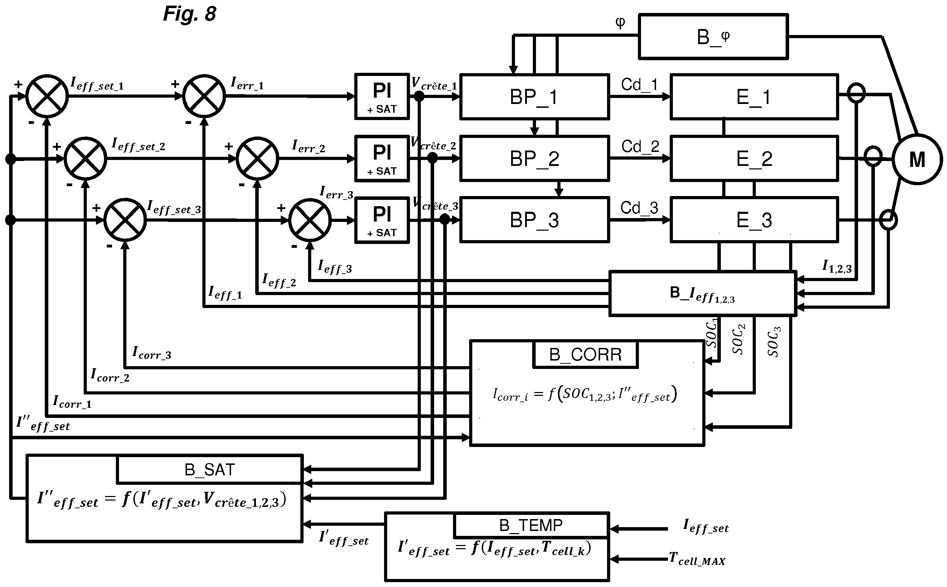

La figure 8 illustre ainsi le principe de la correction de la valeur de consigne en fonction d'un paramètre supplémentaire à celui déjà employé dans le bloc de correction (paramètre d'état $ST_i$ tel que l'état de charge $SOC_i$). Dans cet exemple il s'agit de tenir compte également de la température $T_{cell\_k}$ des cellules des packs-batterie, en déterminant/mesurant les températures de toutes les cellules des trois packs-batterie et en retenant par exemple celle qui a la valeur la plus élevée. Cette valeur de température la plus élevée, parmi toutes celles des cellules, est injectée dans un bloc B_TEMP de contrôle en saturation de la consigne, tenant compte de cette valeur maximale $T_{cell\_MAX}$. Ce bloc de contrôle en saturation applique la relation suivante :

$$I'_{eff\_set} = f\left(I_{eff\_set}; T_{cell\_MAX}\right)$$

En variante, plutôt que la température la plus élevée, il est possible de tenir compte de la température moyenne de toutes les cellules, ou de la température la plus élevée parmi les trois températures moyennes déterminées pour les trois packs-batterie.

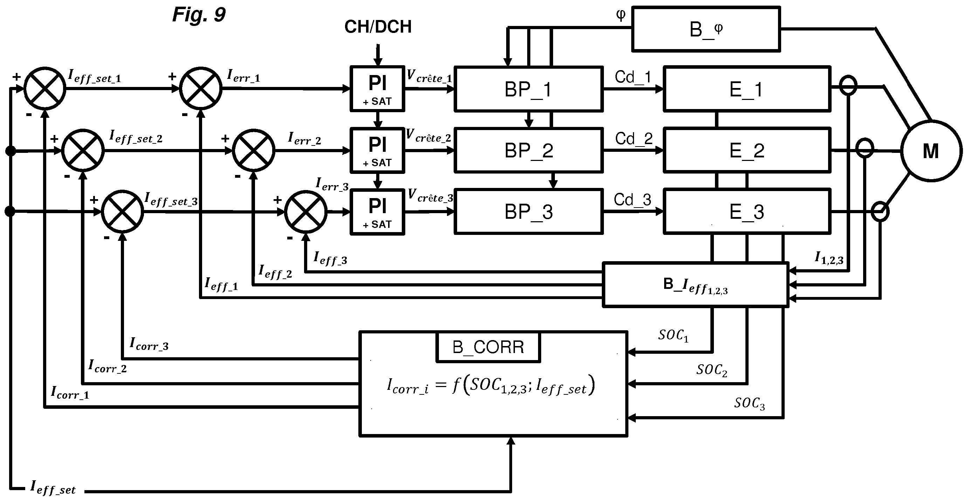

Des variantes de réalisation sont également présentées sur les figures 9 à 11. Elles permettent de tenir compte de la charge des packs-batterie. En effet, l'utilisation d'une consigne en courant efficace, fait que celle-ci est par définition toujours positive et ne permet pas de différencier les cas de charge et de décharge.

Sur la figure 9, une entrée supplémentaire, référencée CH/DCH (pour charge ou décharge) est intégrée au système, afin de distinguer la charge de la décharge. Le procédé comporte une étape de lecture de cette entrée supplémentaire.

Dans cet exemple, en cas de charge, la machine électrique sera un générateur électrique triphasé et chaque pack-batterie doit se synchroniser à la tension de la phase correspondante. En cherchant à réduire la tension sur chaque pack-batterie par rapport à la tension que fournirait le générateur à vide, chaque pack-batterie peut réguler son courant de charge. L'entrée CH/DCH est appliquée sur les correcteurs PI de la boucle de régulation de courant. Elle sera en mode CH (charge) et la consigne en courant efficace sera un courant efficace de charge ou en mode DCH (décharge) et la consigne en courant efficace sera un courant efficace de décharge.

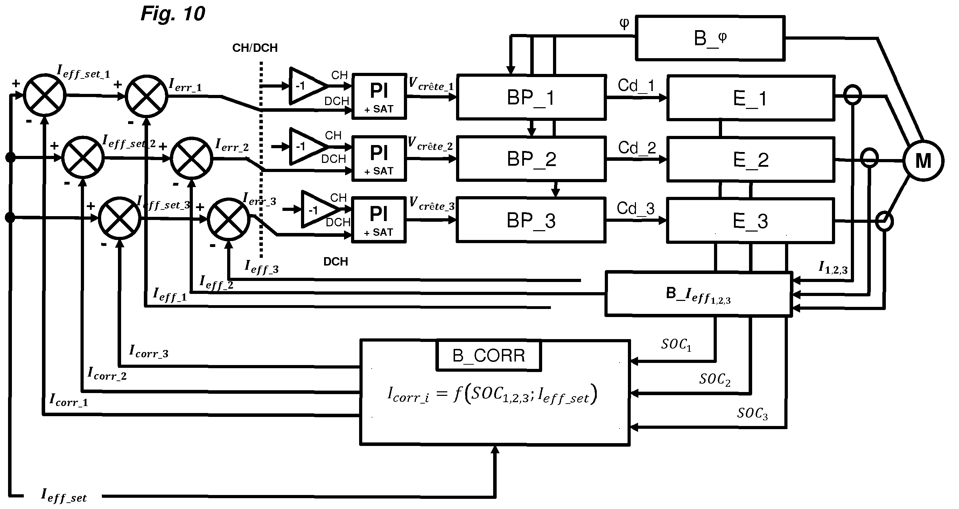

Sur la figure 10, alternativement à l'entrée CH/DCH ajoutée sur les correcteurs PI, le système peut multiplier par -1 les erreurs en entrée des trois correcteurs PI ($I_{err\_1}$, $I_{err\_2}$, $I_{err\_3}$) de la boucle de régulation de courant, en cas de système en charge, et les laisser inchangée en cas de décharge.

Dans les variantes des figures 9 et 10, les autres blocs déjà explicités ci-dessus restent inchangés.

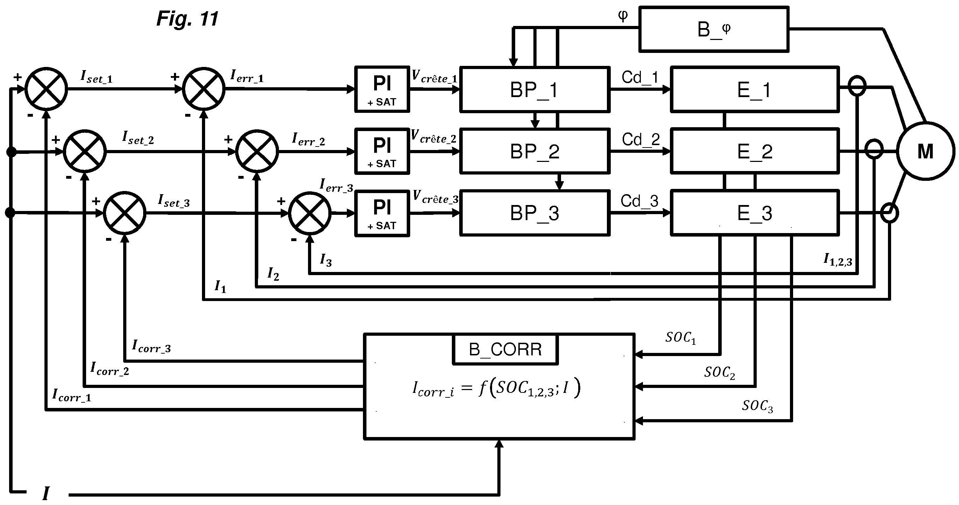

Dans la variante de réalisation de la figure 11, la valeur de consigne I en courant ainsi que toutes les autres valeurs de courant $I_1$, $I_2$, $I_3$ ont une valeur signée. Le signe des courants mesurés est directement lié au fait que le courant mesuré est en phase ou en opposition de phase avec la tension appliquée au moteur. Cette consigne signée, permet donc de gérer aussi bien la charge et la décharge. Elle est injectée en entrée du système et elle est commune aux trois phases.

Les figures 12 et 13 permettent d'illustrer le principe de fonctionnement de l'invention, quel que soit le synoptique de commande mis en œuvre.

A titre d'exemple, on se place dans la configuration de la figure 6A, et pour un fonctionnement en décharge, on analyse les deux cas de figure suivants.

Dans le premier cas, représenté sur la figure 12, les trois packs-batterie sont initialement chargés à différents niveaux de SOC ($SOC_1$, $SOC_2$, $SOC_3$ ). En l'absence de correction (c'est-à-dire sans le bloc de correction B_CORR décrit ci-dessus), la décharge se termine (à Tf) quand le premier pack-batterie est complètement déchargé, même si les deux autres packs-batterie ne sont pas encore complètement déchargés (première diagramme D1 de la figure 12). Avec le bloc de correction B_CORR de l'invention, comme on peut le voir sur diagramme D2, les différents états de charge $SOC_i$ des trois packs-batterie convergent durant la décharge pour être tous déchargés complètement à Tf. Cela permet de décharger tous les packs-batterie complètement et par conséquent de pouvoir exploiter l'ensemble de l'énergie qui était stockée dans les trois packs-batterie, ce qui augmente l'autonomie du système. Le diagramme D3 montre les corrections appliquées aux valeurs de consignes (en courant dans cet exemple, mais le principe reste valide aussi pour les valeurs de consigne en tension et en puissance selon les configurations décrites ci-dessus).

Dans le deuxième cas, représenté sur la figure 13, les trois packs-batterie sont initialement chargés avec un même état de charge $SOC_i$, mais ils sont utilisés de manière déséquilibrée. Par exemple le moteur M connecté aux packs-batterie consomme des courant différents sur les trois phases ou encore les trois packs-batterie ont un état de santé (SOH) différent (c'est à dire une capacité différente). En l'absence de correction (c'est-à-dire sans le bloc de correction B_CORR décrit ci-dessus), comme visible sur le diagramme D10, un écart de plus en plus important apparait entre les niveaux de charge des trois packs-batterie et la décharge se termine à Tf quand le premier pack-batterie est complètement déchargé même si les deux autres packs-batterie ne sont pas encore complètement déchargés. Avec le bloc de correction B_CORR de l'invention, comme on peut le voir sur le diagramme D20, les états de charge $SOC_i$ des 3 packs-batterie restent équilibrés pendant toute la décharge, jusqu'à Tf. Cela permet de décharger tous les packs-batterie complètement et par conséquent de pouvoir exploiter l'ensemble de l'énergie stockée dans les trois packs-batterie, ce qui augmente l'autonomie du système. Comme le diagramme D3, le diagramme D30 montre les corrections appliquées sur les valeurs de consigne en courant (le principe reste valide aussi pour les valeurs de consigne en tension et en puissance).

On comprend de ce qui précède que la solution de l'invention présente de nombreux avantages, parmi lesquels :

- Elle permet de maintenir un équilibre entre les états des packs-batterie dans une topologie d'alimentation d'une machine électrique telle que celle de la figure 2 ;
- Elle est simple à mettre en œuvre car elle utilise des données déjà disponibles dans le fonctionnement normal de la commande de la machine électrique ;
- Elle s'adapte à toutes les situations, notamment quel que soit le type de valeur de consigne utilisée, courant, tension ou puissance ;
- Elle peut tenir compte d'un ensemble de paramètres de surveillance d'un pack-batterie, tel que par exemple l'état de charge du pack-batterie, l'état de santé des cellules, la résistance interne des cellules...
- Elle permet à la fois d'augmenter l'autonomie de l'équipement d'alimentation et de prolonger sa durée de vie ;

**Revendications**

1. Procédé de commande d'un équipement d'alimentation électrique d'un système électrique à plusieurs phases, ledit équipement comprenant au moins un ensemble d'alimentation électrique (E_1, E_2, E_3) distinct par phase dudit système électrique, chaque ensemble d'alimentation électrique comprenant au moins un pack-batterie défini par un paramètre d'état ($ST_i$) et doté d'au moins une batterie destinée à fournir une tension de commande sur la phase à laquelle il est connecté en tenant compte d'au moins une valeur de consigne ($X_{set}$), qui consiste à :

   - Exécuter au moins un bloc de correction (B_CORR) recevant en entrée chaque valeur de consigne et le paramètre d'état ($ST_i$) de chaque pack-batterie des ensembles d'alimentation électrique du système, et qui est **caractérisé en ce que** :
   - Pour chaque ensemble d'alimentation électrique (E_1, E_2, E_3), ledit bloc de correction (B_CORR) est configuré pour déterminer une valeur de correction ($X_{corr\_i}$) à appliquer directement ou indirectement à sa valeur de consigne en tenant compte de la différence entre la valeur du paramètre d'état ($ST_i$) de son pack-batterie et de la valeur d'un paramètre d'état optimal ($ST_{OPT}$) déterminé à partir des valeurs des paramètres d'état des packs-batterie de tous les ensembles d'alimentation électrique.

2. Procédé selon la revendication 1, **caractérisé en ce que**, pour chaque ensemble d'alimentation électrique (E_1, E_2, E_3), le paramètre d'état de la batterie correspond à son état de charge, sa température, sa résistance interne, son état de santé, sa capacité de charge ou à une combinaison de plusieurs de ces paramètres.

3. Procédé selon la revendication 1 ou 2, **caractérisé en ce que**, pour chaque ensemble d'alimentation électrique, ladite valeur de consigne est corrigée selon le principe suivant :

$$X_{corr\_i} = X_{set} * \left( 1 - \frac{ST_i}{ST_{OPT}} \right)$$

où :

   - $ST_i$ correspond à la valeur du paramètre d'état du pack-batterie de l'ensemble d'alimentation i ;

- $ST_{OPT}$ correspond à la valeur optimale des trois valeurs de paramètres d'état ;
- $X_{corr\_i}$ correspond à la valeur de correction à appliquer à la valeur de consigne de l'ensemble d'alimentation électrique i ;
- $X_{set}$ correspond à la valeur de consigne à appliquer à l'ensemble d'alimentation électrique i ;

4. Procédé selon la revendication 1 ou 2, **caractérisé en ce que**, pour chaque ensemble d'alimentation électrique (E_1, E_2, E_3), ladite valeur de consigne est corrigée selon le principe suivant :

$$X_{corr\_i} = X_{set} * K * \left(1 - \frac{ST_i}{ST_{OPT}}\right)$$

où :

- $ST_i$ correspond à la valeur du paramètre d'état du pack-batterie de l'ensemble d'alimentation i ;
- $ST_{OPT}$ correspond à la valeur optimale des trois valeurs de paramètres d'état ;
- $X_{corr\_i}$ correspond à la valeur de correction à appliquer à la valeur de consigne de l'ensemble d'alimentation électrique i ;
- $X_{set}$ correspond à la valeur de consigne à appliquer à l'ensemble d'alimentation électrique i ;
- $K$ correspond à un coefficient de pondération ;

5. Procédé selon la revendication 1 ou 2, **caractérisé en ce que**, pour chaque ensemble d'alimentation électrique (E_1, E_2, E_3), ladite valeur de consigne ($X_{set}$) est corrigée en mettant en œuvre une boucle de régulation avec un correcteur de type Intégral, Proportionnel-Intégral (PI) ou Proportionnel-Intégral-Dérivé (PID), configurée pour annuler progressivement les écarts sur le paramètre d'état entre les ensembles d'alimentation électrique.

6. Procédé selon l'une des revendications 1 à 5, **caractérisé en ce que** la valeur de consigne est une valeur de tension crête ($V_{crête}$).

7. Procédé selon l'une des revendications 1 à 5, **caractérisé en ce que** la valeur de consigne est une valeur de courant efficace ($I_{eff\_set}$).

8. Procédé selon la revendication 7, **caractérisé en ce qu'**il consiste à exécuter une boucle de régulation en courant, configurée pour déterminer chaque valeur de consigne en courant efficace à partir des valeurs mesurées des courants sur chaque phase du système électrique.

9. Procédé selon l'une des revendications 1 à 5, **caractérisé en ce que** la valeur de consigne est une puissance électrique ($P_{SET}$).

10. Procédé selon la revendication 9, **caractérisé en ce qu'**il comporte une étape de détermination d'une valeur de consigne en courant à partir de la valeur de consigne en puissance et des tensions mesurées sur les phases du système électrique.

11. Procédé selon l'une des revendications 1 à 10, **caractérisé en ce que** la valeur de consigne est identique pour tous les ensembles d'alimentation.

12. Procédé selon l'une des revendications 1 à 11, **caractérisé en ce qu'**il consiste à exécuter un bloc (B_SAT) de contrôle de saturation en tension configuré pour déterminer une valeur de consigne corrigée, tenant compte des tensions de commande ($V_{crête\_1}$, $V_{crête\_2}$, $V_{crête\_3}$) à appliquer par chaque ensemble d'alimentation et de chaque valeur de consigne et **en ce que** ladite valeur de consigne corrigée déterminée devient la valeur de consigne appliquée en entrée dudit bloc de correction (B_CORR).

13. Procédé selon l'une des revendications 1 à 12, **caractérisé en ce qu'**il comporte une étape de lecture d'un paramètre d'entrée représentatif d'un mode charge ou d'un mode décharge de chaque pack-batterie.

14. Système de commande d'un équipement d'alimentation électrique d'un système électrique (M) à plusieurs phases, ledit équipement comprenant au moins un ensemble d'alimentation électrique (E_1, E_2, E_3) distinct par phase dudit système électrique, chaque ensemble d'alimentation électrique comprenant au moins un pack-batterie défini par un paramètre d'état ($ST_i$) et doté d'au moins une batterie destinée à fournir une tension de commande sur la phase à laquelle il est connecté en tenant compte d'au moins une valeur de consigne ($X_{set}$), ledit système comporte :

- Au moins un bloc de correction (B_CORR) recevant en entrée chaque valeur de consigne et le paramètre d'état ($ST_i$) de chaque pack-batterie des ensembles d'alimentation électrique du système, et en ce que, ledit système est **caractérisé en ce que** :
- Pour chaque ensemble d'alimentation électrique (E_1, E_2, E_3), ledit bloc de correction (B_CORR) est configuré pour déterminer une valeur de correction ($X_{corr\_i}$) à appliquer directement ou indirectement à sa valeur de consigne en tenant compte de la différence entre la valeur du paramètre d'état ($ST_i$) de son pack-batterie et de la valeur d'un paramètre d'état optimal ($ST_{OPT}$) déterminé à partir des valeurs des paramètres d'état des packs-batterie de tous les ensembles d'alimentation électrique.

15. Equipement d'alimentation électrique d'un système électrique à plusieurs phases, ledit équipement comprenant au moins un ensemble d'alimentation électrique (E_1, E_2, E_3) distinct par phase dudit système électrique, chaque ensemble d'alimentation électrique comprenant au moins un pack-batterie défini par un paramètre d'état ($ST_i$) et doté d'au moins une batterie destinée à fournir une tension de commande sur la phase à laquelle il est connecté en tenant compte d'au moins une valeur de consigne ($X_{set}$), **caractérisé en ce qu'**il comporte un système de commande tel que défini dans la revendication 14, adapté pour commander chaque ensemble d'alimentation électrique de l'équipement pour obtenir une charge complète ou une décharge complète de tous les packs-batterie de manière simultanée.

## Patentansprüche

1. Verfahren zur Steuerung einer Stromversorgungsvorrichtung eines elektrischen Systems mit mehreren Phasen, wobei die Vorrichtung mindestens eine pro Phase gesonderte Stromversorgungseinheit (E_1, E_2, E_3) des elektrischen Systems umfasst, wobei jede Stromversorgungseinheit mindestens ein Batteriepack umfasst, das durch einen Zustandsparameter ($ST_i$) definiert und mit mindestens einer Batterie ausgestattet ist, die dazu bestimmt ist, eine Steuerspannung in der Phase bereitzustellen, mit der sie verbunden ist, und dabei mindestens einen Sollwert ($X_{set}$) zu berücksichtigen, das in Folgendem besteht:

   - Ausführen von mindestens einem Korrekturblock (B_CORR), der am Eingang jeden Sollwert und den Zu-standsparameter ($ST_i$) jedes Batteriepacks der Stromversorgungseinheiten des Systems empfängt,

   und das **dadurch gekennzeichnet ist, dass**:

   - für jede Stromversorgungseinheit (E_1, E_2, E_3) der Korrekturblock (B_CORR) dazu konfiguriert ist, einen Korrekturwert ($X_{corr\_i}$) zu bestimmen, der direkt oder indirekt auf ihren Sollwert anzuwenden ist, und dabei die Differenz zwischen dem Wert des Zustandsparameters ($ST_i$) ihres Batteriepacks und dem Wert eines optimalen Zustandsparameters ($ST_{OPT}$), der auf der Grundlage der Werte der Zustandsparameter der Batteriepacks aller Stromversorgungseinheiten bestimmt wird, zu berücksichtigen.

2. Verfahren nach Anspruch 1, **dadurch gekennzeichnet, dass** für jede Stromversorgungseinheit (E_1, E_2, E_3) der Zustandsparameter der Batterie ihrem Ladezustand, ihrer Temperatur, ihrem inneren Widerstand, ihrem Gesundheitszustand, ihrer Ladekapazität oder einer Kombination von mehreren dieser Parameter entspricht.

3. Verfahren nach Anspruch 1 oder 2, **dadurch gekennzeichnet, dass** für jede Stromversorgungseinheit der Sollwert nach dem folgenden Prinzip korrigiert wird:

$$X_{corr\_i} = X_{set} * \left(1 - \frac{\bar{ST_i}}{ST_{OPT}}\right)$$

wobei:

   - $ST_i$ dem Wert des Zustandsparameters des Batteriepacks der Versorgungseinheit i entspricht;
   - dem optimalen Wert der drei Zustandsparameterwerte entspricht;

- $X_{corr\_i}$ dem Korrekturwert entspricht, der auf den Sollwert der Stromversorgungseinheit i anzuwenden ist;
- $X_{set}$ dem Sollwert entspricht, der auf die Stromversorgungseinheit i anzuwenden ist;

4. Verfahren nach Anspruch 1 oder 2, **dadurch gekennzeichnet, dass** für jede Stromversorgungseinheit (E_1, E_2, E_3) der Sollwert nach dem folgenden Prinzip korrigiert wird:

$$X_{corr\_i} = X_{set} * K * \left(1 - \frac{ST_i}{ST_{OPT}}\right)$$

wobei:

- $ST_i$ dem Wert des Zustandsparameters des Batteriepacks der Versorgungseinheit i entspricht;
- dem optimalen Wert der drei Zustandsparameterwerte entspricht;
- $X_{corr\_i}$ dem Korrekturwert entspricht, der auf den Sollwert der elektrischen Versorgungseinheit i anzuwenden ist;
- $X_{set}$ dem Sollwert entspricht, der auf die Stromversorgungseinheit i anzuwenden ist;
- Keinem Gewichtungskoeffizienten entspricht.

5. Verfahren nach Anspruch 1 oder 2, **dadurch gekennzeichnet, dass** für jede Stromversorgungseinheit (E_1, E_2, E_3) der Sollwert ($X_{set}$) korrigiert wird, indem eine Regelschleife mit einem Regler vom Integral-, Proportional-Integral (PI)- oder Proportional-Integral-Differenzial (PID)-Typ eingesetzt wird, die dazu konfiguriert ist, die Zustandsparameterabweichungen zwischen den Stromversorgungseinheiten progressiv gegen null zu bringen.

6. Verfahren nach einem der Ansprüche 1 bis 5, **dadurch gekennzeichnet, dass** der Sollwert ein Spitzenspannungswert ($V_{crête}$) ist.

7. Verfahren nach einem der Ansprüche 1 bis 5, **dadurch gekennzeichnet, dass** der Sollwert ein Strom-Effektivwert ($I_{eff\_set}$) ist.

8. Verfahren nach Anspruch 7, **dadurch gekennzeichnet, dass** es darin besteht, eine Stromregelschleife auszuführen, die dazu konfiguriert ist, jeden Effektiv-Stromsollwert auf der Grundlage der Werte zu bestimmen, die für die Ströme in jeder Phase des elektrischen Systems gemessen werden.

9. Verfahren nach einem der Ansprüche 1 bis 5, **dadurch gekennzeichnet, dass** der Sollwert eine elektrische Leistung ($P_{set}$) ist.

10. Verfahren nach Anspruch 9, **dadurch gekennzeichnet, dass** es einen Schritt des Bestimmens eines Stromsollwerts auf der Grundlage des Leistungssollwerts und der Spannungen, die an den Phasen des elektrischen Systems gemessen werden, umfasst.

11. Verfahren nach einem der Ansprüche 1 bis 10, **dadurch gekennzeichnet, dass** der Sollwert für alle Versorgungseinheiten identisch ist.

12. Verfahren nach einem der Ansprüche 1 bis 11, **dadurch gekennzeichnet, dass** es darin besteht, einen Block (B_SAT) zur Kontrolle der Spannungssättigung auszuführen, der dazu konfiguriert ist, einen korrigierten Sollwert zu bestimmen und dabei die Steuerspannungen ($V_{Crête\_1}$, $V_{crête\_2}$, $V_{crête\_3}$), die von jeder Versorgungseinheit anzuwenden sind und jeden Sollwert zu berücksichtigen, und dass der bestimmte korrigierte Sollwert der Sollwert wird, der am Eingang des Korrekturblocks (B_CORR) angelegt wird.

13. Verfahren nach einem der Ansprüche 1 bis 12, **dadurch gekennzeichnet, dass** es einen Schritt des Lesens eines Eingangsparameters umfasst, der für einen Lademodus oder einen Entlademodus jedes Batteriepacks repräsentativ ist.

14. Steuerungssystem einer Stromversorgungsvorrichtung eines elektrischen Systems (M) mit mehreren Phasen, wobei die Vorrichtung mindestens eine pro Phase gesonderte Stromversorgungseinheit (E_1, E_2, E_3) des elektrischen Systems umfasst, wobei jede Stromversorgungseinheit mindestens ein Batteriepack umfasst, das durch einen Zustandsparameter ($ST_i$) definiert und mit mindestens einer Batterie ausgestattet ist, die dazu bestimmt ist, eine Steuerspannung in der Phase bereitzustellen, mit der sie verbunden ist, und dabei mindestens einen Sollwert ($X_{set}$)

zu berücksichtigen, wobei das System umfasst:

- mindestens einen Korrekturblock (B_CORR), der am Eingang jeden Sollwert und den Zustandsparameter ($ST_i$) jedes Batteriepacks der Stromversorgungseinheiten des Systems empfängt, und dass

das System **dadurch gekennzeichnet ist, dass**:

- für jede Stromversorgungseinheit (E_1, E_2, E_3) der Korrekturblock (B_CORR) dazu konfiguriert ist, einen Korrekturwert ($X_{corr\_i}$) zu bestimmen, der direkt oder indirekt auf ihren Sollwert anzuwenden ist, und dabei die Differenz zwischen dem Wert des Zustandsparameters ($ST_i$) ihres Batteriepacks und dem Wert eines optimalen Zustandsparameters ($ST_{OPT}$), der auf der Grundlage der Werte der Zustandsparameter der Batteriepacks aller Stromversorgungseinheiten bestimmt wird, zu berücksichtigen.

15. Stromversorgungsvorrichtung eines elektrischen Systems mit mehreren Phasen, wobei die Vorrichtung mindestens eine pro Phase gesonderte Stromversorgungseinheit (E_1, E_2, E_3) des elektrischen Systems umfasst, wobei jede Stromversorgungseinheit mindestens ein Batteriepack umfasst, das durch einen Zustandsparameter ($ST_i$) definiert und mit mindestens einer Batterie ausgestattet ist, die dazu bestimmt ist, eine Steuerspannung in der Phase bereitzustellen, mit der sie verbunden ist, und dabei mindestens einen Sollwert ($X_{set}$) zu berücksichtigen, **dadurch gekennzeichnet, dass** sie ein Steuerungssystem nach Anspruch 14 umfasst, das dazu geeignet ist, jede Stromversorgungseinheit der Vorrichtung zu steuern, um simultan eine vollständige Ladung oder eine vollständige Entladung aller Batteriepacks zu erhalten.

**Claims**

1. Control method for controlling an electric-power-supply device for supplying electric power to a multi-phase electrical system, said device comprising at least one separate electric-power-supply assembly (E_1, E_2, E_3) per phase of said electrical system, each electric-power-supply assembly comprising at least one battery pack defined by a state parameter ($ST_i$) and equipped with at least one battery intended to deliver a control voltage to the phase to which it is connected, while taking into account at least one setpoint value ($X_{set}$), which consists in:

- executing at least one correction block (B_CORR) that receives, as input, each setpoint value and the state parameter ($ST_i$) of each battery pack of the electric-power-supply assemblies of the system,

and which is **characterized in that**:

- for each electric-power-supply assembly (E_1, E_2, E_3), said correction block (B_CORR) is configured to determine a correction value ($X_{corr\_i}$) to be applied directly or indirectly to its setpoint value, while taking into account the difference between the value of the state parameter ($ST_i$) of its battery pack and the value of an optimal state parameter ($ST_{OPT}$) determined from the values of the state parameters of the battery packs of all the electric-power-supply assemblies.

2. Method according to Claim 1, **characterized in that**, for each electric-power-supply assembly (E_1, E_2, E_3), the state parameter of the battery corresponds to its state of charge, its temperature, its internal resistance, its state of health, its charging capacity or a combination of a plurality of these parameters.

3. Method according to Claim 1 or 2, **characterized in that**, for each electric-power-supply assembly, said setpoint value is corrected according to the following principle:

$$X_{corr\_i} = X_{set} * \left( 1 - \frac{ST_i}{ST_{OPT}} \right)$$

where:

- $ST_i$ corresponds to the value of the state parameter of the battery pack of the power-supply assembly i;
- corresponds to the optimal value of the three state-parameter values;
- $X_{corr\_i}$ corresponds to the correction value to be applied to the setpoint value of the electric-power-supply

assembly i;

- $X_{set}$ corresponds to the setpoint value to be applied to the electric-power-supply assembly i.

4.  Method according to Claim 1 or 2, **characterized in that**, for each electric-power-supply assembly (E_1, E_2, E_3), said setpoint value is corrected according to the following principle:

$$X_{corr\_i} = X_{set} * K * \left(1 - \frac{ST_i}{ST_{OPT}}\right)$$

where:

- $ST_i$ corresponds to the value of the state parameter of the battery pack of the power-supply assembly i;
- corresponds to the optimal value of the three state-parameter values;
- $X_{corr\_i}$ corresponds to the correction value to be applied to the setpoint value of the electric-power-supply assembly i;
- $X_{set}$ corresponds to the setpoint value to be applied to the electric-power-supply assembly i;
- $K$ corresponds to a weighting coefficient.

5.  Method according to Claim 1 or 2, **characterized in that**, for each electric-power-supply assembly (E_1, E_2, E_3), said setpoint value ($X_{set}$) is corrected by implementing a regulation loop with an integral corrector, a proportional-integral (PI) corrector or a proportional-integral-derivative (PID) corrector, said loop being configured to gradually decrease to zero the differences in the state parameter between the electric-power-supply assemblies.

6.  Method according to one of Claims 1 to 5, **characterized in that** the setpoint value is a peak-voltage value ($V_{crête}$).

7.  Method according to one of Claims 1 to 5, **characterized in that** the setpoint value is an RMS-current value ($I_{eff\_set}$).

8.  Method according to Claim 7, **characterized in that** it consists in executing a current regulation loop configured to determine each RMS-current setpoint value from the values of the currents measured on each phase of the electrical system.

9.  Method according to one of Claims 1 to 5, **characterized in that** the setpoint value is an electrical power ($P_{set}$).

10. Method according to Claim 9, **characterized in that** it comprises a step of determining a current setpoint value from the power setpoint value and from the voltages measured on the phases of the electrical system.

11. Method according to one of Claims 1 to 10, **characterized in that** the setpoint value is identical for all the power-supply assemblies.

12. Method according to one of Claims 1 to 11, **characterized in that** it consists in executing a voltage-saturation control block (B_SAT) configured to determine a corrected setpoint value, taking into account the control voltages ($V_{crête\_1}$, $V_{crête\_2}$, $V_{crête\_3}$) to be applied by each power-supply assembly and each setpoint value and **in that** said determined corrected setpoint value becomes the setpoint value input into said correction block (B_CORR).

13. Method according to one of Claims 1 to 12, **characterized in that** it comprises a step of reading an input parameter representative of a charging mode or of a discharging mode of each battery pack.

14. Control system for controlling an electric-power-supply device for supplying electric power to a multi-phase electrical system (M), said device comprising at least one separate electric-power-supply assembly (E_1, E_2, E_3) per phase of said electrical system, each electric-power-supply assembly comprising at least one battery pack defined by a state parameter ($ST_i$) and equipped with at least one battery intended to deliver a control voltage to the phase to which it is connected, while taking into account at least one setpoint value ($X_{set}$), said system comprising:

- at least one correction block (B_CORR) that receives, as input, each setpoint value and the state parameter ($ST_i$) of each battery pack of the electric-power-supply assemblies of the system, and in that,

said system is **characterized in that**:

- for each electric-power-supply assembly (E_1, E_2, E_3), said correction block (B_CORR) is configured to determine a correction value ($X_{corr\_i}$) to be applied directly or indirectly to its setpoint value, while taking into account the difference between the value of the state parameter ($ST_i$) of its battery pack and the value of an optimal state parameter ($ST_{OPT}$) determined from the values of the state parameters of the battery packs of all the electric-power-supply assemblies.

15. Electric-power-supply device for supplying electric power to a multi-phase electrical system, said device comprising at least one separate electric-power-supply assembly (E_1, E_2, E_3) per phase of said electrical system, each electric-power-supply assembly comprising at least one battery pack defined by a state parameter ($ST_i$) and equipped with at least one battery intended to deliver a control voltage to the phase to which it is connected, while taking into account at least one setpoint value ($X_{set}$), **characterized in that** it comprises a control system such as defined in Claim 14, suitable for controlling each electric-power-supply assembly of the device so as to obtain a complete charge or a complete discharge of all the battery packs simultaneously.

**Fig. 1**

BATT

$P_{batt}$

INV

$P_1$

$P_2$

$P_3$

M

**Fig. 2**

E_1

E_2

E_3

$P_1$

$P_2$

$P_3$

M

**Fig. 3A**

UC

BATT

INV

E_i

*Fig. 3B*

UC

E_i

*Fig. 3C*

*Fig. 4*

**Fig. 5**

Fig. 6A

EP 3 847 734 B1

Fig. 6B

Fig. 6C

Fig. 7A

Fig. 7B

**Fig. 8**

EP 3 847 734 B1

Fig. 9

*Fig. 10*

*Fig. 11*

*Fig. 12*

**Fig. 13**

## RÉFÉRENCES CITÉES DANS LA DESCRIPTION

**Documents brevets cités dans la description**

- US 6058032 A
- US 2016261123 A1
- WO 2013007810 A1
- WO 2012117111 A1
- WO 2012117110 A2
- WO 2012117109 A1
- US 9493090 B2
- WO 2013007810 A
- WO 2012168426 A